Europäisches Patentamt

European Patent Office

Office européen des brevets

(19)

(11) Publication number: **0 148 002**
**A2**

(12)

# EUROPEAN PATENT APPLICATION

(21) Application number: **84308933.5**

(22) Date of filing: **20.12.84**

(51) Int. Cl.⁴: **C 08 L 25/16**

(30) Priority: **30.12.83 US 566984**

(43) Date of publication of application:
**10.07.85 Bulletin 85/28**

(84) Designated Contracting States:
**BE DE FR GB IT NL**

(71) Applicant: **MOBIL OIL CORPORATION**
**150 East 42nd Street**
**New York New York 10017(US)**

(72) Inventor: **Gunesin, Binnur Zeynep**
**27 Old Stirling Road**
**Warren, New Jersey 07060(US)**

(74) Representative: **West, Alan Harry**
**Mobil Court 3 Clements Inn**
**London WC2A 2EB(GB)**

(54) Improved high impact poly(para-methylstyrene) polymers.

(57) A blend of high impact poly(p-methylstyrene) with an additive polymer having a higher environmental stress crack resistance can be molded into a shaped container which is resistant to fats.

EP 0 148 002 A2

## IMPROVED HIGH IMPACT POLY(PARA-METHYLSTYRENE) POLYMERS

The present invention is directed to blends of high impact poly(p-methylstyrene) (HIPPMS).

It is well known in the art to produce various shaped articles from foamed and unfoamed polymer sheets by thermoforming methods. Such articles may be used as containers for packaging foods.

It is also known to blend HIPPMS with other polymers. For example, it has previously been disclosed to blend HIPPMS and polystyrene with conjugated polydienes (U. S. Patent No. 4,352,908), a conjugated diene, such as isoprene or butadiene (U. S. Patent Nos. 4,260,694 and 4,397,988), or a styrene-conjugated diolefin block copolymer such as styrene-butadiene-styrene (U. S. Patent No. 4,275,179). The general purpose of these blends is to create a stronger, more heat resistant product. However, due to the structure of the HIPPMS polymer, containers made from HIPPMS are melted by hot fats and fatty acids and thus cannot be used to package fat-containing foods that are to be heated. It has been discovered that containers made from HIPPMS will become resistant to hot fats when treated by radiation (U. S. Patent No. 4,205,114). However, until now it has not been known how to form non-radiated HIPPMS containers which may hold fat-containing foods without the above-mentioned adverse effects.

Surprisingly, it has now been found that containers made from blends of HIPPMS and an additive polymer having higher than normal environmental stress crack resistance (ESCR) are resistant to the deleterious effects of fat-containing foods and fatty acids.

Accordingly, the present invention resides in a blend of high impact poly(p-methylstyrene) with an additive polymer having a higher environmental stress crack resistance than said high impact poly(p-methylstyrene).

One component of the blend of the invention is high impact
poly(p-methylstyrene), which is generally a graft copolymer,
produced by grafting polymeric units derived from the
p-methylstyrene onto a backbone polymer which is generally of a
rubbery nature. Suitable backbone polymers include polybutadiene,
poly(dimethyl-butadiene), polyisoprene, polychloroprene and other
synthetic rubbers, such as styrene-butadiene rubbers,
ethylene-propylene-diene elastomers, polyacrylates, nitrile rubbers
and copolymers with other aromatic monomers, including vinyl
toluene. The backbone will generally comprise 2-25% by weight of
the high impact copolymer, preferably 3-10% by weight. Normal
grafting techniques, comparable to those used for making high impact
polystyrenes are useful; they are well known in the art and referred
to, for example, in U. S. Patent No. 2,694,692.

The p-methylstyrene used in producing the HIPPMS may be
provided in the form of a mixture of methylstyrene isomers rich in
p-methylstyrene. Such a mixture may contain at least 90 weight
percent, preferably 95 weight percent, more preferably 97 or greater
weight percent p-methylstyrene and less than 0.1 weight percent
o-methylstyrene, with the balance being m-methylstyrene. A typical
mixture contains, by weight, about 97 percent p-methylstyrene, about
3 percent m-methylstyrene, and about 0.05 percent o-methylstyrene.
The mixtures are obtained by catalytic dehydrogenation of the
mixtures of ethylmethyl benzene isomers described in U.S. Patent No.
4,086,287.

The other essential blend component is an additive polymer
which, after blending, imparts a higher ESCR to the final product.
Briefly, ESCR is a standard laboratory method for measuring the
resistance of a strand of polymer to tensile pressure after the area
of highest stress concentration (generally the center point) of the
strand has been exposed to an oil environment. Representative oils
include butter, margarine, cottonseed oil or salad oil. A variety
of additive polymers having higher ESCR qualities than HIPPMS can be used, until representative examples including linear low density polyethylene, polypropylene, polycarbonate, ethylene methylacrylate acrylic acid (Surlyn), polyethylene teraphalate glycol (PETG), polystyrene-polybutadiene diblock, and polybutadiene-polymethylstyrene diblock.

Because the primary concern is in the improvement of the ESCR of HIPPMS and not to form a completely new copolymer product, the additive copolymer is added in an amount no more than 10 weight %, and preferably no more than 5 weight %, of the blend. In this manner, the additive copolymer will beneficially affect the HIPPMS container while not disrupting the continuous matrix characteristic of HIPPMS.

Preferably, the additive copolymer is selected so as to have a lower surface free energy than HIPPMS. The additive copolymer will then diffuse to the surface of HIPPMS and form a thin layer coating, thus preventing fatty acids from penetrating and destroying the integrity of the formed product-container. Therefore, the additive copolymer will act as a surface protection.

Blending of the polymers is accomplished by procedures well known in the art, including mixing the polymers in a Brabender mixer, extruder or in a Farrel two-roll differential speed mixer. The blend temperature falls within the range of 150-250°C, preferably 200°C. Although HIPPMS and the additive copolymer may be blended simultaneously, it is preferred to preblend the HIPPMS for approximately five minutes and then add the additive copolymer. This latter method enhances the "adhesive" properties between HIPPMS and the additive copolymer, thus creating greater interfacial adhesion between the polymers. The additive copolymer is then slowly added to the HIPPMS to ensure that the additive copolymer is completely and thoroughly blended into HIPPMS. After the addition is complete, the blending process is continued for another ten minutes, again in order to ensure complete blending of the two copolymers. The product blend is then removed from the mixer, cooled to room temperature and pelletized.

F-2655                                    -4-

   The resultant blend exhibits high impact strength and
resistance to fats and fatty acids and is particularly suited for
applications in which high impact poly(p-methylstyrene) is used.
These blends may be thermoformed to produce shaped articles well
known to those skilled in the art.  A preferred method of
thermoforming is vacuum forming.  Shaped articles produced by
thermoforming the product blend can vary widely.  Typical shapes
include trays, tubs, bowls, cups, and the like.  Such shaped
articles are usable for packaging foods, and especially
fat-containing foods.

   The following examples are given in order that the invention
may be more fully understood.  Proportions and percentages are given
by weight.


## COMPARATIVE EXAMPLE 1 AND EXAMPLE 1


   The ESCR values in these examples were determined by applying
a force of 1076 psi(7520kPa) to strands of the polymer after the
areas of greatest stress on the polymer strands had been contacted
with mixtures of hydrogenated fatty acids sold as Chiffon brand
margarine.  In the Comparative Example, the sample was produced from
a blend of 90 weight % HIPPMS and 10 weight % linear low density
polyethylene (GP2).  Measurements were made of the fail time, i.e.,
the time required in minutes for the applied force to snap each
polymer strand and the results were as follows:

| Example | Blend | Fail Time (Minutes) |
|---------|-------|---------------------|
| Comparative 1 | HIPPMS (R35B1) (Control) | 13.9 |
| | HIPPMS (90 wt. %)/ | |
| | LLDPE (10 wt. %) | 49 |

F-2655                    -5-

COMPARATIVE EXAMPLE 2 AND EXAMPLES 2-9

The blends listed below were tested using the same method as Example 1 with the exceptions that the fatty acid used to contact the samples consisted of a mixture of 80 weight % cottonseed oil and 20 weight % oleic acid and the ESCR was measured at an applied force of 600 psi (4238 kPa).  The fail times of the resultant blends were as follows:

| Example | Blend | Fail Time (Minutes) |
|---|---|---|
| Comparative | HIPPMS (R35B1) (Control) | 44 |
| 2 | HIPPMS (90 wt. %) | |
| | LLDPE (10 wt. %) (GP2) | 148 |
| 3 | HIPPMS (90 wt. %) | |
| | Polycarbonate (10 wt. %) | |
| | (Lexan - Trademark) | 99.2 |
| 4 | HIPPMS (90 wt. %) | |
| | Ethylene Methylacrylate Acrylic | |
| | Acid (10 wt. %) | |
| | (NA-Surlyn - Trademark DuPont) | 89.4 |
| 5 | HIPPMS (95 wt. %) | |
| | Polyethylene teraphthalate | |
| | glycol (5 wt. %) | |
| | (PETG - Trademark Eastman Kodak) | 99.3 |
| 6 | HIPPMS (95 wt. %) | |
| | Polystyrene(40 wt. %) - | |
| | Polybutadiene diblock(60 wt. %) | |
| | (5 wt. %) | |
| | (Solprene - Trademark | |
| | Phillips Petroleum Co.) | 229 |

F-2655                          -6-

| | | |
|---|---|---|
| 7 | HIPPMS (95 wt. %) | |
| | Polystyrene (30 wt. %) - | |
| | Polybutadiene diblock(70 wt. %) | |
| | (5 wt. %) | |
| | (Stereon 870 - Trademark Firestone) | 210 |
| 8 | HIPPMS (95 wt. %) | |
| | Butadiene/Paramethylstyrene diblock | |
| | copolymer (5 wt. %) | 147 |
| 9 | HIPPMS (90 wt. %) | |
| | Ethylene Methylacrylate Acrylic | |
| | Acid (10 wt. %) | |
| | (ZN-Surlyn 9520 - Trademark DuPont) | 102 |

The results of Examples 1-9 indicate that the addition of an additive copolymer, having higher ESCR qualities than HIPPMS, increases the ESCR of the HIPPMS copolymer, thus yielding a high impact polymer with greater tensile strength and increased resistance to fats and fat-containing foods.

CLAIMS

1. A blend of high impact poly(p-methylstyrene) with an additive polymer having a higher environmental stress crack resistance than said high impact poly(p-methylstyrene).

2. A blend according to Claim 1, wherein said additive copolymer is present in an amount up to 10 weight % of the blend.

3. A blend according to Claim 1, wherein said additive copolymer is present in an amount up to 5 weight % of the blend.

4. A blend according to any preceding Claim, wherein said additive polymer is selected from linear low density polyethylene, polypropylene, polycarbonate, ethylene methylacrylate acrylic acid terpolymer, polyethylene teraphalate glycol, polystyrene-polybutadiene diblock, and butadiene-paramethylstyrene diblock.

5. A shaped container which is resistant to fats and which is produced from a blend as claimed in any preceding Claim.

4949H/0297H